# FASCICULE DE BREVET EUROPEEN

(11) **EP 4 077 233 B1**
(45) Date de publication et mention de la délivrance du brevet: **08.05.2024**
(21) Numéro de dépôt: 20845408.2
(22) Date de dépôt: 14.12.2020
(51) Int. Cl.: C03C 25/32, C04B 20/00, C09D 165/02

(54) **STRUCTURE TEXTILE À BASE DE FIBRES DE VERRE AVEC REVÊTEMENT PARYLÈNE**
GLASFASERTEXTILSTRUKTUR MIT PARYLENBESCHICHTUNG
GLASS-FIBRE TEXTILE STRUCTURE WITH PARYLENE COATING

(30) Priorité: 16.12.2019 FR 1914450
(43) Date de publication de la demande: 26.10.2022
(73) Titulaire: Saint-Gobain Adfors, 92400 Courbevoie (FR)
(72) Inventeur: GARNIER, Louis, 75020 PARIS (FR); BOUCHARD, Jonas, 75017 PARIS (FR); MATTMANN, Eric, 75013 PARIS (FR); GARCES, Camila, BROOKLINE, Massachusetts 02445 (US)
(74) Mandataire: Saint-Gobain Recherche
(86) Numéro de dépôt international: PCT/FR2020/052411
(87) Numéro de publication internationale: WO 2021/123583

(56) Documents cités:
- US-A- 4 961 994
- US-A1- 2016 115 300

## Description

L'invention est relative à une structure textile à base de fibres de verre dont la surface est couverte d'un revêtement de parylène de plusieurs microns d'épaisseur et l'utilisation d'une telle structure textile pour le renforcement de matériaux, de préférence de matériaux à liant hydraulique à caractère alcalin.

Les textiles utilisés pour renforcer les matériaux à base de liant hydraulique, en particulier à base de plâtre ou de matériaux cimentaires tels que les mortiers ou bétons, sont généralement à base de polymères organiques, d'acier ou de fibres de verre.

L'acier est le matériau de renfort le plus ancien et le plus répandu. Il permet un renforcement très important, notamment pour des applications structurelles (voir par exemple US 3 120 257 ou WO 95/13440).

Les polymères sont généralement utilisés sous forme de fibres courtes dispersées ou sous forme de textile imprégné par une résine (voir par exemple WO 2017/117045).

Les fibres de verre sont utilisées en particulier pour le renfort de matériaux cimentaires, notamment les mortiers de façade dans les systèmes d'isolation thermique par l'extérieur (ETICS en anglais, ITE en français), pour la fabrication de plaques de ciments ou encore pour le renfort de béton préfabriqué. Les fibres de verre sont utilisées généralement sous forme de voiles non-tissés liés par un liant organique ou sous forme de grilles ouvertes.

Les fibres de verre présentent l'avantage par rapport à l'acier d'être plus souples et légères, donc plus faciles à enrouler, transporter et manier, et de mieux résister à la corrosion par les acides.

Lorsqu'on souhaite utiliser des fibres de verre dans des matériaux alcalins tels que les ciments, mortiers et bétons, il est nécessaire d'utiliser des fibres de verre résistant aux alcalins (verre AR) qui est significativement plus cher que le verre ordinaire (verre E ou C).

Il est connu de protéger des fibres de renfort en verre ordinaire E ou C par des revêtements organiques à base de polymères thermoplastiques ou thermodurcis, notamment à base d'élastomère SBR (caoutchouc styrène-butadiène), latex styrene-acrylique, latex acrylique ou encore à base de PVC, mais la protection conférée par ces polymères n'est généralement pas totalement efficace et durable et nécessite une parfaite continuité du revêtement qui est difficile à obtenir. Ces défauts et imperfections limitent l'utilisation des fibres de verre dans des applications exigeantes. Les couches protectrices anti-alcalins à base de polymères organiques présentent par ailleurs l'inconvénient d'augmenter considérablement le coût des produits de renfort à base de fibres de verre et de dégrader leur résistance au feu. US-4961994 décrit un composite à revêtement protecteur et un procédé pour former un tel revêtement; un revêtement protecteur d'imperméabilisation 13, fait d'une matière telle qu'un oxyde métallique ou un polymère comme un poly(para-xylylène) sur le matériau composite 11 résout les problèmes d'humidité que posent les autres matériaux composites. US-201670115300 concerne un matériau composite qui comprend un polymère de poly(phénylène) thermoplastique et un constituant de renforcement. Le polymère de poly(phénylène) comprend des motifs para-phénylène. Au moins une partie des motifs de para-phénylène peut être substituée par un groupe fonctionnel polaire, non acide. Le polymère de poly(phénylène) thermoplastique peut également comprendre des motifs méta-phénylène. L'invention décrit également un procédé de fabrication d'un matériau composite à l'aide d'un polymère de poly(phénylène) dissous dans un solvant et d'une fibre de renforcement.

La présente invention est basée sur l'idée de protéger des renforts textiles en fibres de verre avec un type particulier de polymère organique qui n'est pas déposé par voie liquide mais par un procédé qui ressemble au dépôt chimique en phase vapeur. Cette méthode de dépôt permet une excellente couverture des structures textiles, jusque dans les moindres détails. Les couches déposées épousent parfaitement le relief de surface et fournissent de ce fait une meilleure protection du verre sous-jacent que les dépôts polymères habituels.

Le polymère organique utilisé dans la présente invention est le parylène, en particulier le parylène C, un polymère connu en tant que tel mais qui, à la connaissance des inventeurs, n'a jamais été utilisé pour la protection chimique de fibres de verre contre les milieux alcalins. Ce polymère peut être déposé directement sur les fibres de verre, ensimées ou non, et éventuellement couvertes, par endroits, de liant organique, par exemple dans le cas des mats non-tissés à base de fibres de verre.

La protection par la couche de parylène peut bien entendu être renforcée par le dépôt d'autres couches organiques, par exemple par des polymères, notamment des élastomères, déposés sur ou sous la couche de parylène.

La présente demande a par conséquent pour premier objet une structure textile à base de fibres de verre portant un revêtement de parylène (poly(paraxylylène)) ayant une épaisseur comprise entre 5 µm et 30 µm.

Elle a en outre pour objet un procédé de renforcement d'un matériau solide, ledit procédé comprenant l'introduction d'une telle structure textile portant un revêtement de parylène dans un matériau de base fluide et le durcissement du matériau de base.

Enfin la présente demande a pour objet un produit solide renforcé ou un matériau solide renforcé comprenant un matériau de base solide (matrice) et une telle structure textile portant un revêtement de parylène, incorporée dans le matériau de base solide.

Le terme « structure textile » désigne dans la présente demande un ensemble de fibres de verre textile. Les fibres de verre textile, également appelés filaments ou monofilaments de verre, peuvent être simplement rassemblées en faisceaux (*rovings*) ou en fils multifilaments. Ces faisceaux ou fils peuvent à leur tour être assemblés en des structures plus complexes par tissage, tricotage ou aiguilletage ou bien par collage, par exemple au moyen d'un liant. Les structures textiles de la présente invention englobent ainsi les *rovings* et fils multifilaments, les mats ou voiles non-tissés, aiguilletés ou liés, les toiles (textiles tissés fermés), les grilles (textiles tissés ou tricotés ouverts), ou encore les produits non-tissés désignés souvent par le terme anglais *laid scrims* et qui sont des structures de type grilles formées de couches de fils superposées dans au moins deux directions différentes.

Les structures textiles de la présente invention sont de préférence choisies dans le groupe formé par les fils multifilaments, les *rovings,* les mats non-tissés liés par un liant organique, les toiles, les grilles tissées, les grilles tricotées, et les *laid scrims.* Bien entendu, les structures textiles englobent également les combinaisons de deux ou plus de deux éléments de cette liste, par exemple un stratifié d'une grille tissée ou tricotée et d'un mat non-tissé.

Lorsque les structures textiles sont des mats non-tissés, les fibres de verre textile sont de préférence liées au moyen d'un liant organique à base d'un polymère thermodurci. On peut citer à titre d'exemples de liants polymères thermodurcis ceux obtenus à partir d'une résine mélamine-formaldéhyde, urée-formaldéhyde, phénol-formaldéhyde ou d'un mélange de ces résines.

Le revêtement en parylène a de préférence une épaisseur comprise entre 6 µm et 25 µm, en particulier entre 7 et 20 µm.

Il est déposé de manière connue par un procédé en phase gazeuse appelé « procédé de Gorham » d'après le nom de son inventeur (Gorham W. F., 1966 « A New, General Synthetic Method for the Préparation of Linear Poly(p-xylylene) », J. Polym. Sci. Part A-1 Vol.4, p. 3027-3039). Le procédé de dépôt comprend la sublimation du précuseur dimère solide ([2,2]paracyclophane, éventuellement chloré) de formule 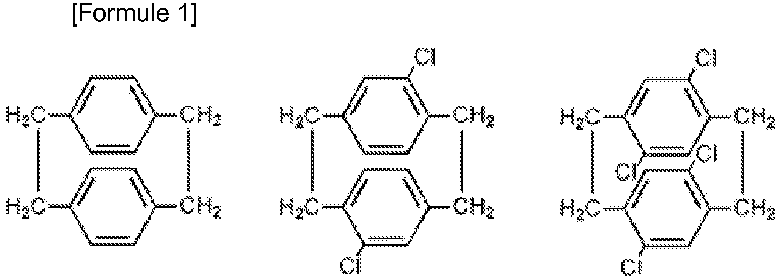 par chauffage à une température supérieure à 100 °C, la pyrolyse du dimère gazeux à une température comprise entre environ 500 °C et 700 °C aboutissant à la formation d'un monomère réactif, et le dépôt du monomère réactif sur l'objet à revêtir maintenu sous vide (environ 0,1 torr) et généralement à température ambiante.

Ce dépôt peut être fait sur les constituants de la structure textile (monofilaments, rovings, fils) ou bien sur la structure textile fabriquée à partir des monofilaments, rovings ou fils.

Ainsi, dans une structure textile de type grille tissée, le revêtement peut couvrir individuellement chacun des fils de la grille et, de ce fait, être présent au niveau des points de contact des fils. Ou bien il peut être appliqué sur la structure textile dans sa forme définitive et recouvrir la surface de celle-ci sans être présent au niveau des points de contact entre les fils ou filaments.

Pour former une barrière anti-alcalins efficace, le revêtement de parylène couvre de préférence entièrement toute la surface de la structure textile de manière à isoler la structure textile de l'atmosphère.

Les fibres de verre de la structure textile de la présente invention peuvent en principe être formées de n'importe quel type de verre, par exemple de verre A, E, C, T ou AR.

Dans un mode de réalisation préféré, les fibres de verre sont en verre E A ou C. Ce sont des verres de faible coût qui, du fait de leur sensibilité importante aux alcalins, profitent le plus de la fonction de barrière chimique du revêtement de parylène. Le verre E est particulièrement intéressant car particulièrement peu coûteux mais sensible aux alcalis.

Lorsque la structure textile est formée de fibres de verre maintenues ensemble ou enrobées par un liant (par exemple mat non-tissé, toile, grille tissée ou tricotée, *laid scrim*), les fibres de verre représentent avantageusement de 30 à 95 %, de préférence de 35 à 90 % en poids et en particulier de 40 à 85 %, du poids de la structure textile avant dépôt du revêtement de parylène. La partie complémentaire à 100 % est formée par exemple par le liant organique ou par des fibres différentes des fibres de verre, par exemple des fibres de carbone, des fibres d'origine naturelle ou encore des fibres métalliques.

Lorsque la structure textile est formée de fibres de verre non liées ou enrobées par un liant organique (*rovings*, fils retordus) les fibres de verre représentent généralement de 98 à 100 % du poids de la structure textile avant dépôt du revêtement de parylène.

La masse surfacique totale de la structure textile couverte par le revêtement parylène est avantageusement comprise entre 30 et 600, de préférence entre 40 et 500, en particulier entre 50 et 400.

Le revêtement de parylène représente avantageusement de 5 à 200 %, de préférence de 8 à 160 %, mieux encore de 10 à 150%, rapporté au poids de la structure textile avant dépôt du revêtement de parylène.

Le parylène utilisé pour la formation du revêtement protecteur anti-alcalins est de préférence du parylène C (poly(2-chloro-paraxylylène)).

Le parylène C présente de manière connue une plus faible perméabilité aux gaz et une meilleure résistance aux acides que le parylène N (non chloré) et forme un film avec une meilleure résistance mécanique et une meilleure résistance à l'usure. Par ailleurs, le rendement de dépôt du parylène C est plus élevé que celui du parylène N.

La structure textile de la présente invention portant le revêtement de parylène peut en outre être enrobée d'un revêtement en polymère organique. De tels revêtements sont généralement formés d'élastomères, typiquement de caoutchouc styrène-butadiène, styrene acrylique, acrylique ou encore PVC. Ce revêtement additionnel renforce la résistance aux alcalins des structures textiles de la présente invention. Dans le cas des *laid scrims* il assure en outre la cohésion de la structure formée de couches de fils superposées.

Les structures textiles de la présente invention peuvent être utilisées en tant que renforts mécaniques de matériaux solides. Leur bonne résistance aux alcalis fait qu'elles sont particulièrement appropriées pour le renforcement de matériaux à base de liants hydrauliques. On entend par liant hydraulique un matériau minéral qui, lorsqu'il est mélangé avec de l'eau, forme un liquide ou une pâte qui durcit par réaction du liant avec l'eau.

Les liants hydrauliques sont notamment choisis dans le groupe formé par le ciment Portland, la chaux, les ciments alumineux, les ciments de laitiers, les ciments sulfo-alumineux et les ciments activés par les alcalins, ou encore le plâtre.

Le procédé de renforcement d'un matériau solide de la présente invention comprend l'introduction d'une structure textile portant un revêtement de parylène telle que décrite ci-dessus dans un matériau de base fluide et le durcissement du matériau de base.

Le matériau de base comprend de préférence de l'eau et un liant hydraulique. Il a avantageusement un pH basique supérieur à 8, de préférence supérieur à 9, en particulier supérieur à 10.

Le produit ou matériau solide renforcé obtenu par le procédé ci-dessus comprend un matériau de base solide et une structure textile portant un revêtement de parylène, incorporée dans le matériau de base solide

On peut citer comme exemples de produits ou matériaux solides renforcés par les structures textiles de la présente invention les mortiers de façades de systèmes d'isolation par l'extérieur (ITE), les chapes, les plaques de ciment, les bétons, les éléments préfabriqués en ciments ou béton, et les enduits de jointements.

### Exemple 1

On dépose sur un mat non-tissé de fibres de verre E présentant un grammage de 50 g/m² dont les fibres sont liées avec 25% d'un liant organique à base de résine urée-formaldéhyde, un revêtement de parylène C d'une épaisseur uniforme d'environ 10 µm.

Le mat non-tissé est ensuite soumis à un test de vieillissement en milieu alcalin tel que défini dans ETAG 004 (Guide technique pour les systèmes d'isolation des façades par l'extérieur) qui se déroule de la manière suivante :

On découpe 20 échantillons rectangulaires de dimensions 300 mm x 50 mm dans le mat non-tissé portant le revêtement de parylène. Pour la moitié des échantillons la longueur (300 mm) est parallèle à la direction machine, pour l'autre moitié des échantillons la longueur est perpendiculaire à la direction machine.

Les 20 échantillons sont immergés pendant 28 jours, à une température de 23 °C, dans 4 litres d'une solution alcaline ayant la composition suivante : 1 g/l de NaOH, 4 g/l de KOH, 0,5 g/l Ca(OH)₂.

Après 28 jours d'immersion les échantillons sont rincés pendant 5 minutes dans une solution acide (5 ml d'HCl dilué à 35 %), puis placés successivement pendant 5 minutes dans 3 bains d'eau de 4 litres chacun.

Les échantillons sont ensuite séchés pendant 48 heures à une température de 23 °C (± 2 °C) et une humidité relative de 50 % (± 5%).

On détermine ensuite la résistance mécanique en traction au moyen d'un banc MTS Insider fonctionnant avec une vitesse de traction de 100 mm/minute.

Le tableau 1 montre la résistance à la rupture en traction (RRT exprimée en N/5cm) des échantillons découpés parallèlement à la direction machine et perpendiculairement à la direction machine, avant et après exposition au test de vieillissement, en comparaison avec des échantillons d'un mat non-tissé identique ayant subi le même traitement mais n'ayant pas été revêtu au préalable avec du parylène. Les valeurs présentées dans le tableau sont les moyennes (± écart-type) calculées à partir 10 échantillons.

**[Tableau 1]**

| | | Avec parylène | Sans parylène |
|---|---|---|---|
| Traction dans le sens parallèle à la direction machine du mat non-tissé | RRT avant vieillissement | 341 ± 62 | 243 ± 14 |
| | RRT après vieillissement | 266 ± 19 | 57 ± 10 |
| | Taux de conservation de la RRT | **77 %** | 23 % |
| Traction dans le sens perpendiculaire à la direction machine du mat non-tissé | RRT avant vieillissement | 239 ± 86 | 155 ± 61 |
| | RRT après vieillissement | 206 ± 21 | 66 ± 33 |
| | Taux de conservation de la RRT | **86 %** | 43 % |

On peut constater que le vieillissement des mats non-tissés, suite à l'exposition à des conditions alcalines, est significativement ralenti par la présence du revêtement de parylène.

### Exemple 2

Une couche de parylène d'une épaisseur de 10 µm est déposée sur du fil retordu de verre E présentant un titre de 68 tex avant dépôt et de 100 tex après dépôt du parylène.

Dix échantillons de ce fil sont soumis au test « *Strain in Cernent* » décrit dans la norme EN14649 :2005 (Produits préfabriqués en béton - Méthode d'essai de la conservation de la résistance des fibres de verre en contact avec le ciment et le béton (SIC-TEST)).

Le tableau 2 ci-dessous montre l'évolution de la ténacité (exprimée en cN/tex) et du module d'élasticité (exprimé en GPa) du fil revêtu de parylène au cours du test, en comparaison avec le même fil non revêtu de parylène (68 tex).

**[Tableau 2]**

| | Fil avec parylène | Fil sans parylène |
|---|---|---|
| Titre (tex) | 100 | 68 |
| Ténacité initiale (cN/tex) | 56,2 ± | 87,1 ± |
| Ténacité finale (cN/tex) | 22,8 ± | 3,2 ± |
| Taux de conservation de la ténacité | **40,5** % | 3,7 % |
| Module d'élasticité initial (GPa) | 44,7 ± 6,3 | 59,2 ± 2,7 |
| Module d'élasticité final (GPa) | 40,1 ± 1,7 | 12,8 ± 6,8 |
| Taux de conservation du module d'élasticité | **89,7** % | 21,6 % |

Le dépôt d'une couche de protection en parylène permet de conserver près de 90 % du module d'élasticité, contre seulement 21 % pour le fil témoin sans dépôt de parylène. Il en va de même pour la ténacité qui est significativement moins dégradée en présence qu'en l'absence de parylène.

La couche de parylène C revêtant les fils de renfort en verre E constitue ainsi une protection efficace des fils de verre contre l'agression chimique des composants alcalins du matériau cimentaire.

## Revendications

1. Procédé de renforcement d'un matériau solide, comprenant l'introduction d'une structure textile dans un matériau de base fluide comprenant de l'eau et un liant hydraulique et le durcissement du matériau de base, **caractérisé par le fait que** la structure textile est une structure textile à base de fibres de verre, portant un revêtement de parylène (poly(para-xylylène)) ayant une épaisseur comprise entre 5 µm et 30 µm, de préférence entre 6 µm et 25 µm, en particulier entre 7 et 20 µm, et **par le fait que** le matériau de base fluide a un pH basique supérieur à 8.

2. Procédé selon la revendication 1, **caractérisé par le fait que** les fibres de verre sont des fibres de verre A, E ou C, de préférence des fibres de verre E.

3. Procédé selon la revendication 1 ou 2, **caractérisé par le fait que** la structure textile est formée de fibres de verre maintenues ensemble ou enrobées par un liant et que les fibres de verre représentent de 30 à 95 %, de préférence de 35 à 90 % en poids, et en particulier de 40 à 85 % du poids de la structure textile avant dépôt du revêtement de parylène.

4. Procédé selon l'une des revendications précédentes, **caractérisée par le fait que** le parylène est du parylène C (poly(2-chloro-paraxylylène)).

5. Procédé selon l'une des revendications précédentes, **caractérisée par le fait que** le revêtement de parylène représente de 5 à 200 %, de préférence de 8 à 160 %, mieux encore de 10 à 150%, rapporté au poids de la structure textile avant dépôt du revêtement de parylène.

6. Procédé selon l'une quelconque des revendications précédentes, **caractérisé par le fait que** la structure textile est choisie dans le groupe constitué de fils multifilaments, *rovings,* mats non-tissés liés par un liant organique, toiles, grilles tissées, grilles tricotées et *laid scrims.*

7. Procédé selon l'une quelconque des revendications précédentes, **caractérisé par le fait que** le revêtement de parylène couvre entièrement toute la surface de la structure textile de manière à isoler la structure textile de l'atmosphère.

8. Procédé selon l'une quelconque des revendications précédentes, **caractérisé par le fait que** le matériau de base fluide a un pH basique supérieur à 9, en particulier supérieur à 10.

9. Produit ou matériau solide renforcé comprenant un matériau de base solide et une structure textile portant un revêtement de parylène telle que définie dans l'une quelconque des revendications 1 à 7, incorporée dans le matériau de base solide.

10. Produit ou matériau solide renforcé selon la revendication 9, **caractérisé par le fait qu'**il est choisi dans le groupe constitué des mortiers de façades de systèmes d'isolation par l'extérieur (ITE), chapes, plaques de ciment, bétons, éléments préfabriqués en ciments ou béton et enduits de jointement.

## Patentansprüche

1. Verfahren zum Verstärken eines festen Materials, umfassend Einbringen einer Textilstruktur in ein fluides Ausgangsmaterial, umfassend Wasser und ein hydraulisches Bindemittel, und Härten des Ausgangsmaterials,
**dadurch gekennzeichnet, dass** die Textilstruktur eine Textilstruktur auf Glasfaserbasis ist, die eine Beschichtung aus Parylen (Poly(paraxylylen)) trägt, die eine Dicke zwischen 5 µm und 30 µm, vorzugsweise zwischen 6 µm und 25 µm, insbesondere zwischen 7 und 20 µm, besitzt, und **dass** das fluide Ausgangsmaterial einen basischen pH-Wert von mehr als 8 besitzt.

2. Verfahren nach Anspruch 1, **dadurch gekennzeichnet, dass** die Glasfasern A-, E- oder C-Glasfasern, vorzugsweise E-Glasfasern, sind.

3. Verfahren nach Anspruch 1 oder 2, **dadurch gekennzeichnet, dass** die Textilstruktur aus Glasfasern ausgebildet ist, die durch ein Bindemittel zusammengehalten oder umhüllt werden, und **dass** die Glasfasern 30 bis 95 Gew.-%, vorzugsweise 35 bis 90 Gew.-% und insbesondere 40 bis 85 Gew.-%, der Textilstruktur vor dem Aufbringen der Parylenbeschichtung ausmachen.

4. Verfahren nach einem der vorstehenden Ansprüche,
**dadurch gekennzeichnet, dass** das Parylen Parylen C (Poly(2-chlorparaxylylen)) ist.

5. Verfahren nach einem der vorstehenden Ansprüche,
**dadurch gekennzeichnet, dass** die Parylenbeschichtung 5 bis 200 Gew.-%, vorzugsweise 8 bis 160 Gew.-%, mehr bevorzugt 10 bis 150 Gew.-%, der Textilstruktur vor dem Aufbringen der Parylenbeschichtung ausmacht.

6. Verfahren nach einem der vorstehenden Ansprüche,
**dadurch gekennzeichnet, dass** die Textilstruktur aus der Gruppe ausgewählt ist, bestehend aus Multifilamentgarnen, Mehrfachfasern, durch ein organisches Bindemittel gebundenen Vliesmatten, Stoffen, Gittergeweben, gewirkten Gitterstoffen und Gelegen.

7. Verfahren nach einem der vorstehenden Ansprüche,
**dadurch gekennzeichnet, dass** die Parylenbeschichtung die gesamte Oberfläche der Textilstruktur vollständig bedeckt, um die Textilstruktur von der Atmosphäre zu isolieren.

8. Verfahren nach einem der vorstehenden Ansprüche,
**dadurch gekennzeichnet, dass** das fluide Ausgangsmaterial einen basischen pH-Wert von mehr als 9, insbesondere mehr als 10, besitzt.

9. Verstärktes festes Produkt oder Material, umfassend ein festes Ausgangsmaterial und eine Textilstruktur, die eine Parylenbeschichtung trägt, wie in einem der Ansprüche 1 bis 7 definiert, die in das feste Ausgangsmaterial eingebettet ist.

10. Verstärktes festes Produkt oder Material nach Anspruch 9,
**dadurch gekennzeichnet, dass** es aus der Gruppe ausgewählt ist, bestehend aus Fassadenmörteln von Außendämmungssystemen (WDVS), Estrichen, Zementplatten, Betonen, Fertigteilen aus Zementen oder Beton und Putzen aus feuerfestem Mörtel.

## Claims

1. A method for reinforcing a solid material, comprising introducing a textile structure into a fluid base material comprising water and a hydraulic binder, and curing the base material **characterized in that** the textile structure is a textile structure made of glass fibers, bearing a parylene (poly(para-xylylene)) coating having a thickness of between 5 µm and 30 µm, preferably between 6 µm and 25 µm, in particular between 7 and 20 µm, and **in that** the fluid base material has a basic pH greater than 8.

2. The method according to claim 1, **characterized in that** the glass fibers are A, E or C glass fibers, preferably E glass fibers.

3. The method according to claim 1 or 2, **characterized in that** the textile structure is made of glass fibers held together or coated by a binder and **in that** the glass fibers represent from 30 to 95%, preferably from 35 to 90% by weight, and in particular from 40 to 85% of the weight of the textile structure before deposition of the parylene coating.

4. The method according to any one of the preceding claims, **characterized in that** the parylene is parylene C (poly(2-chloro-paraxylylene)).

5. The method according to any one of the preceding claims, **characterized in that** the parylene coating represents from 5 to 200%, preferably from 8 to 160%, better still from 10 to 150%, relative to the weight of the textile structure before deposition of the parylene coating.

6. The method according to any of the preceding claims, **characterized in that** it is chosen from the group consisting of multifilament yarns, rovings, non-woven mats bonded by an organic binder, cloths, woven grids, knit grids and laid scrims.

7. The method according to any one of the preceding claims, **characterized in that** the parylene coating completely covers the entire surface of the textile structure so as to isolate the textile structure from the atmosphere.

8. The method according to any one of the preceding claims, **characterized in that** the fluid base material has a basic pH greater than 9, in particular greater than 10.

9. A reinforced solid product or material comprising a solid base material and a textile structure bearing a parylene coating as defined in any of claims 1 to 7, embedded in the solid base material.

10. The reinforced solid product or material according to claim 9, **characterized in that** it is chosen from the group consisting of facade mortars of exterior insulation systems (EIS), screeds, cement plates, concretes, prefabricated elements made from cement or concrete and grouts.
